# EUROPEAN PATENT SPECIFICATION

(11) **EP 1 691 387 B1**
(45) Date of publication and mention of the grant of the patent: **26.09.2007**
(21) Application number: 06002386.8
(22) Date of filing: 06.02.2006
(51) Int. Cl.: H01H 25/04, B60Q 1/42, B60Q 1/14

(54) **Turn signal switch device**
Schaltervorrichtung für Fahrrichtungsanzeige
Interrupteur d'indicateurs de direction

(30) Priority: 09.02.2005 JP 2005033423
(43) Date of publication of application: 16.08.2006
(73) Proprietor: ALPS ELECTRIC CO., LTD., Tokyo 145-8501 (JP)
(72) Inventor: Takahashi, Atsuo, Ota-ku Tokyo 145-8501 (JP)
(74) Representative: Klunker . Schmitt-Nilson . Hirsch

(56) References cited:
- EP-A- 1 477 363
- GB-A- 1 212 700
- US-A- 3 996 433
- US-A- 5 385 067

## Description

### BACKGROUND OF THE INVENTION

### 1. Field of the Invention

The present invention relates to a turn signal switch device according to the preamble of claim 1. Such device is attached to a vehicle steering column or the like to be used as a direction indicator. A device of this type is known from US-A-5 385 067.

### 2. Description of the Related Art

In a turn signal switch device according to the related art, the base end of a control lever is turnably supported by a housing integrally formed with a steering column or the like, and the leading end of the control lever is controlled so as to rotate in the left or right direction indicating position from the neutral position, thereby lighting on and off a left turn or right turn lamp. In such a turn signal switch device, a cam surface is provided in the inner surface of the housing and a driving body which is engaged with the cam surface is provided in the control lever through a spring, in order to hold the control lever in three positions of the left and right direction indicating positions and the neutral position. Further, a cancel mechanism is provided to automatically return the control lever, which is rotated in the left or right direction indicating position, to the neutral position when a steering wheel is rotated in the reverse direction to the indicated direction (for example, refer to JP-A-2001-6495).

Hereinafter, the structure of the turn signal switch device according to the related art will be described with reference to the drawings.

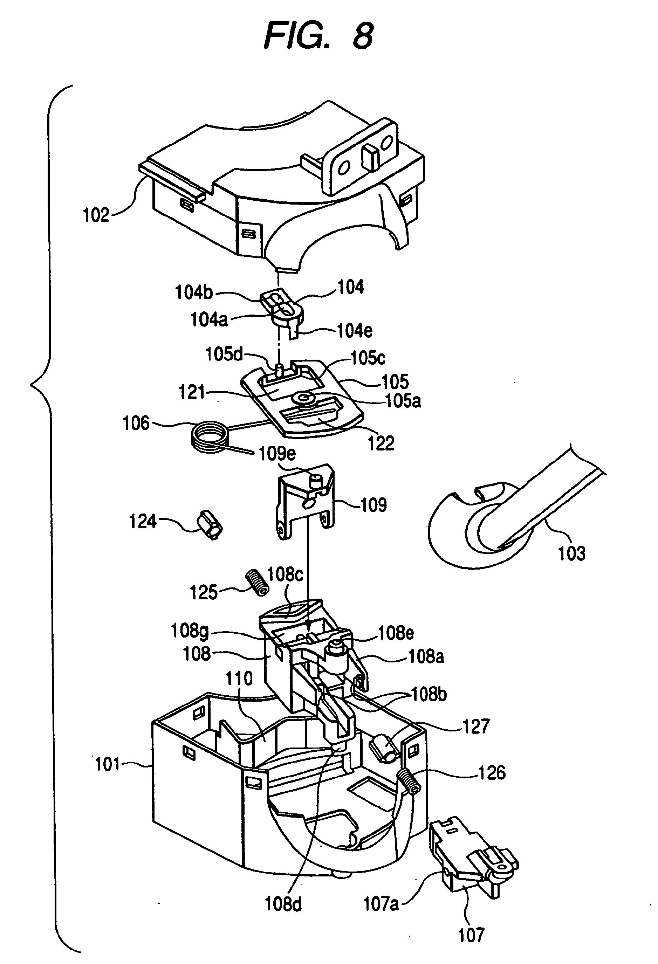

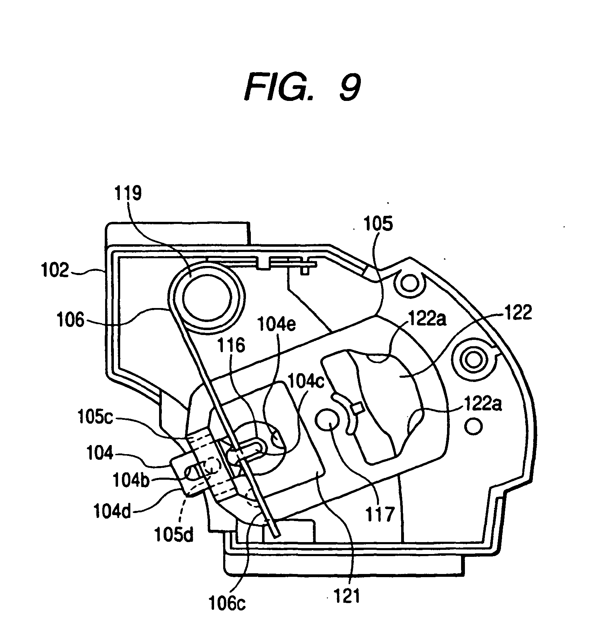

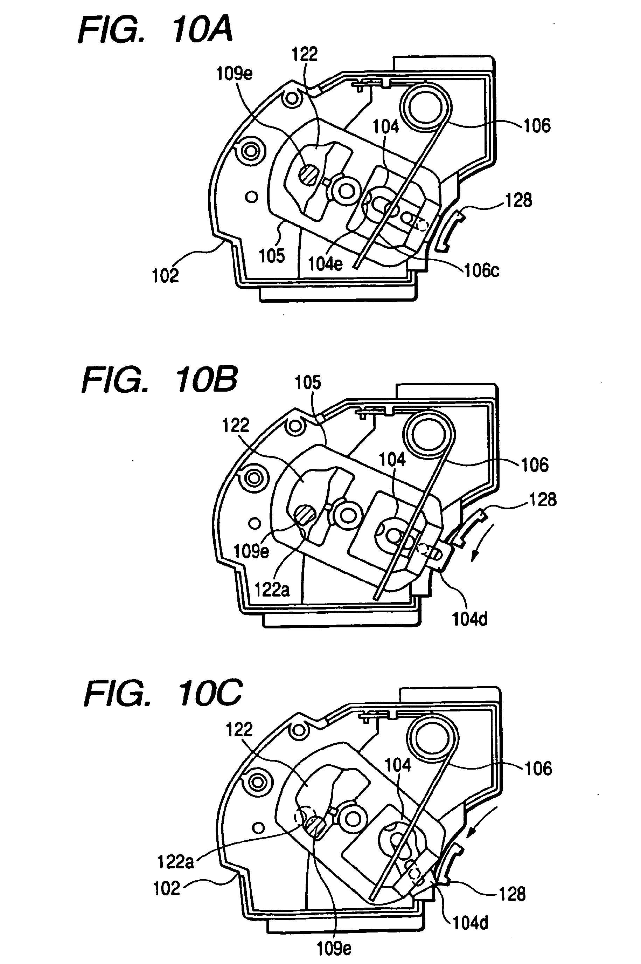

Fig. 8 is an exploded perspective view of the turn signal switch device according to the related art, Fig. 9 is a bottom view showing the cancel mechanism, and Fig. 10 is a diagram explaining an operation of the cancel mechanism.

In Fig. 8, the turn signal switch device mainly includes first and second cases 101 and 102 which are formed of a synthetic resin to compose a housing, a control lever 103 which is rotatably supported by both cases 101 and 102, first and second lever member 104 and 105 which are placed on the inner surface of the second case 102, and a torsion coil spring 106 which elastically urges the first lever member 104 in a direction projecting from the second case 102. As described below, the control lever 103 is provided with an operating member 107, a holder 108, a movable member 109, and the like. The first and second cases 101 and 102 are incorporated by using a snap coupling or the like so as to be fixed to a stator member (not shown) such as a column cover or a combination switch.

Inside the first case 101, a V-shaped cam surface 110 is formed, in which a driving body 124 engaged with the holder 108 is urged by the spring 125 so as to slide. On the bottom surface of the first case 101, a printed board (not shown) is provided, and a contact portion for lighting a left turn or right turn lamp is formed.

On the inner surface of the second case 102, a guide shaft 116 and a spindle 117 are erected in the same line shape. The first lever member 104 is rotatably provided in the guide shaft 116, and the second lever member 105 is rotatably provided in the spindle 117. Further, the first and second lever members 104 and 105 are rotatably connected to each other. In addition, a boss 119 is provided, and the torsion coil spring 106 is inserted into the boss 119.

The first lever member 104 is provided with long holes 104a and 104b and a spring receiving section 104c. The long hole 104a is inserted so as to rotate and slide along the guide shaft 116. Further, an abutting section 104d and a cam section 104e are provided to project in front of and behind of the first lever member 104, respectively.

The second lever member 105 is provided with first and second openings 121 and 122 and a hole 105a which is rotatably axially supported by the spindle 117. The leading end of the second lever member 105 is provided with a projecting section 105c and a connection pin 105d into which the long hole 104b is inserted. Further, the second lever member 105 is stacked on the first lever member 104.

The torsion coil spring 106 has an arm section 106c extending in a cantilever shape. The arm section 106c is engaged with the spring receiving section 104c of the first lever member 104, and the first lever member 104 is elastically urged in the longitudinal direction of the long holes 104a and 104b by the torsion coil spring 106.

The rear end of the operating member 107 is fixed to the root portion of the control lever 103. On both side surfaces of the operating member 107, circular concave sections 107a are provided. The holder 108 has projection pieces 108a extending from both side surfaces toward the back side. Circular projections 108b on the inner surface of the projection pieces 108a are provided to be respectively snapped into both concave sections 107a of the operating member 107. In addition, a crest-like cam surface 108c is provided in the leading end of the upper surface of the holder 108, and the cam surface 108 opposes to the cam section 104e of the first lever member 104. A pair of spindles 108d and 108e project from both upper and lower surfaces of the holder 108 to be fitted into the first and second cases 101 and 102.

The movable member 109 is inserted into an opening 108g of the holder 108, is urged by the spring 125, and is swingably supported by the holder 108. A receiving section 109e projects from the upper surface of the movable member 109 so as to reach the inside of the second opening 122 of the second lever member 105. The receiving section 109e comes in sliding contact with curved sections 122a which projects from both side edges of the opening 122 to the inside thereof.

The first driving body 124 is slidably held by the front end of the holder 108, and the spring 125 is interposed between the movable member 109 and the first driving body 124. The elastic force of the spring 125 causes the leading end of the first driving body 124 to be pressed against the cam surface 110 of the first case 101.

As such, the operating member 107 and the holder 108 which are fixed to the control lever 103 are rotatably connected to each other by the portion where the concave section 107a and the projection 108b are fitted into each other. Further, the holder 108 and the cases 101 and 102 are rotatably connected to each other by the spindles 108d and 108e.

Referring to Fig. 10, an operation of the mechanism will be described. When the control lever 103 is placed in the neutral position, the first driving body 124 is held in the position corresponding to the center of the cam surface 110. At this time, the cam section 104e of the first lever member 104 is abutted on the apex of the cam surface 108c of the holder 108. As shown in Fig. 10, the first lever member 104 retreats against the urging force of the torsion coil spring 106 so as to be positioned outside the rotation trajectory of the cancellation projection 128.

Next, if the control lever 103 turns in any direction, the first driving body 124 slides on the cam surface 110 to be locked. At this time, the holder 108 and the movable member 109 also turn in the same direction, and the apex of the cam surface 108c is deviated from the cam surface 104e. As shown in Fig. 10B, the first lever member 104 advances along the long holes 104a and 104b through the urging force of the torsion coil spring 106, and the abutting section 104d thereof advances into the turning trajectory of the cancellation projection 128.

If a steering wheel is controlled to rotate in the reverse direction from this state, the cancellation projection 128 is abutted on the abutting section 104d of the first lever member 104, and the first lever member 104 rotates around the guide shaft 117 in the clockwise direction. Therefore, the curved section 112a of the second opening 122 presses the receiving section 109e of the movable member 109 upward, and the pressing force is transmitted to the holder 108 through the movable member 109. Accordingly, the first driving body 124 is deviated from the lock portion of the cam surface 110 to move to the center, and the first and second lever members 104 and 105 automatically return to the neutral position shown in Fig. 10A.

When some force acts on the control lever 103 so as to prevent the automatic return in the state of Fig. 10B, the receiving section 109e is pressed along the curved section 122a by a component force in the rotation direction of the second lever member 105 as shown in Fig. 10C, and the movable member 109 swings against the elastic force of the spring 125. Therefore, the first and second lever members 104 and 105 can rotate without being hindered by the receiving section 109e.

On the other hand, when the control lever 103 turns in the direction orthogonal to the indicating position, the control lever 103 and the operating member 107 rotate by a predetermined angle in the perpendicular direction with a straight line connecting both concave sections 107a (both projections 108b) serving as the rotation axis with respect to the housing and the holder 108. The leading end of the second driving body 127 slides on the cam surface provided in the holder 108, so that the tactile feeling is obtained and beam switching or passing operation is performed.

However, in the above-described structure of the turn signal switch device according to the related art, the circular concave sections 107a provided on both side surfaces of the operating member 107 are snap-engaged with the circular projections 108b provided on the inner surface of the projection pieces 108a extending from both side surfaces of the holder 108 to the back side, the holder 108 being pivotably supported by both cases 101 and 102. The root portion of the control lever 103 is fixed to the rear end of the operating member 107 so that the control lever 103 is turnably supported in two directions which are substantially orthogonal to each other.

For this reason, if the elastic force of the spring 126 urging the second driving body 127 sliding on the cam surface of the holder 108 is raised to increase the operating force of the control lever 103, the concave sections 107a of the operating member 107, which are fixed to the root section of the control lever 3 and are snap-engaged with the projections 108b of the projection pieces 108a of the holder 108, are deviated by the reaction force between the control lever 103 and the spring 126.

### SUMMARY OF THE INVENTION

The present invention has been finalized in view of the above-described drawbacks, and it is an advantage of the present invention is that it provides a turn signal switch device in which a control lever is not deviated from a holder even though the operating force of the control lever is increased.

According to an aspect of the invention, a turn signal switch device includes the features of claim 1.

According to the invention, the retaining sections includes a head section which is formed at one end of the shaft and has a larger diameter than the shaft diameter of the shaft, a circumferential groove formed along the circumference direction of the other end of the shaft, and a fitting section which is integrally provided with a portion of the control lever and is always fitted into the circumferential groove even when the control lever is inclined or turns.

According to a further aspect of the invention, the shaft is formed of a metallic material.

### BRIEF DESCRIPTION OF THE DRAWINGS

Fig. 1 is a perspective view showing a state where a second case and first and second lever members of a turn signal switch device according to an embodiment of the present invention are separated;
Fig. 2 is an exploded perspective view showing the turn signal switch device of the invention;
Fig. 3 is a diagram explaining a state where a control lever is placed in a neutral position in a cancel mechanism of the turn signal switch device of the invention;
Fig. 4 is a diagram explaining a cancellation waiting state in the cancel mechanism of the turn signal switch device of the invention;
Fig. 5 is a diagram explaining a state where a steering wheel turns in the reverse direction in the cancellation waiting state of the cancel mechanism while the control lever is pressed;
Fig. 6 is a diagram explaining an axial supporting structure of a control lever and holder not belonging to the invention;
Fig. 7 is a diagram explaining another embodiment of the axial supporting structure of the control lever and holder of the invention;
Fig. 8 is an exploded perspective view showing a turn signal switch device according to the related art;
Fig. 9 is a bottom view showing a cancel mechanism according to the related art; and
Fig. 10 is a diagram explaining an operation of the cancel mechanism according to the related art.

### DESCRIPTION OF THE PREFERRED EMBODIMENT

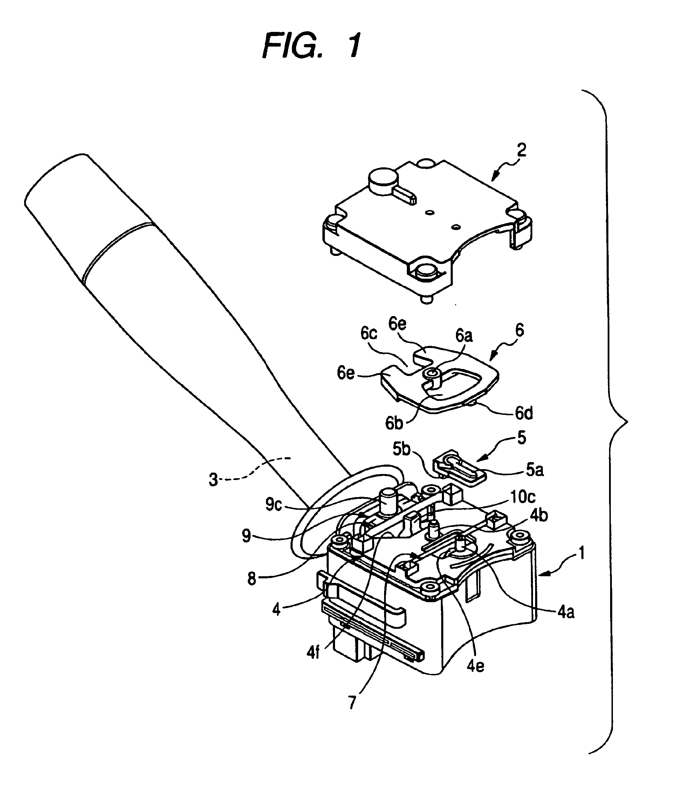

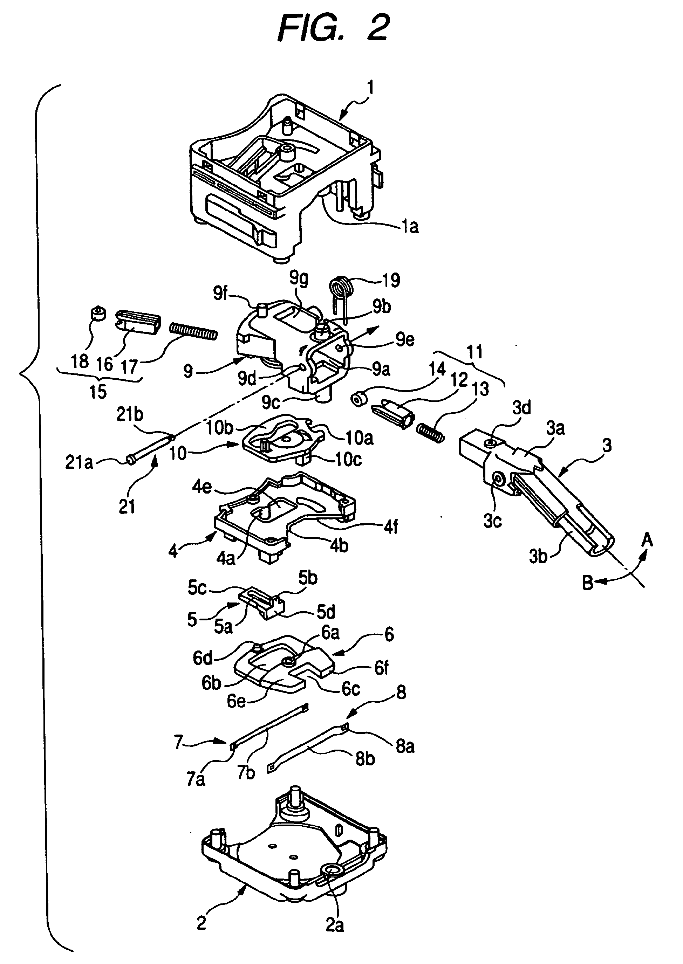

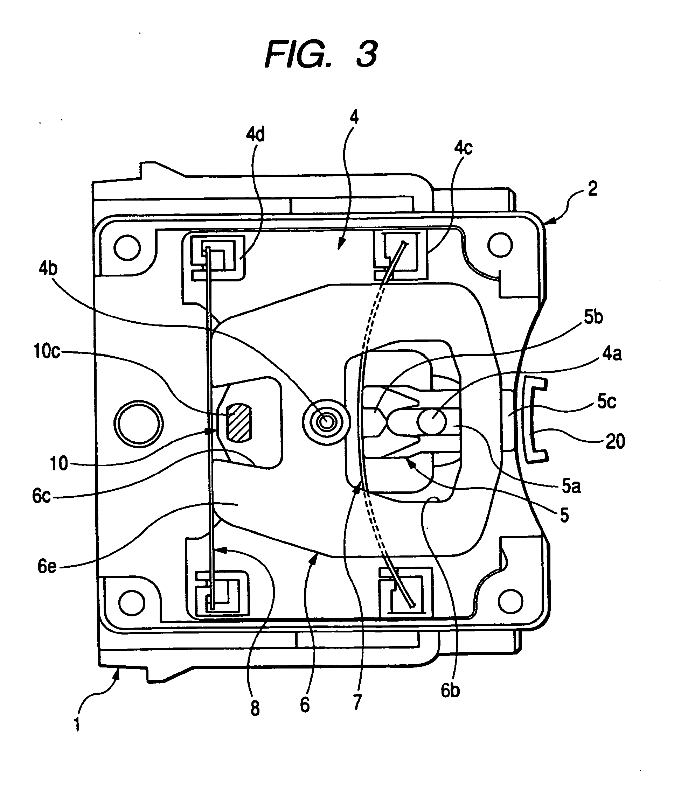

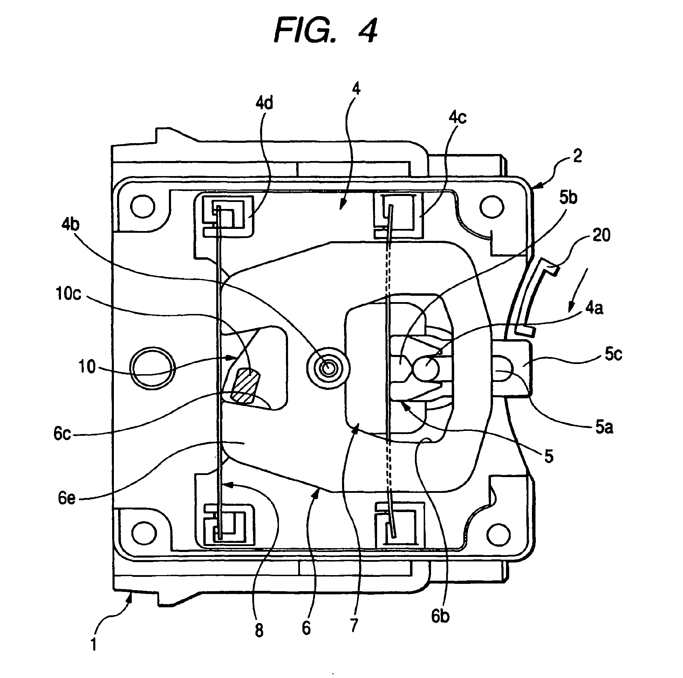

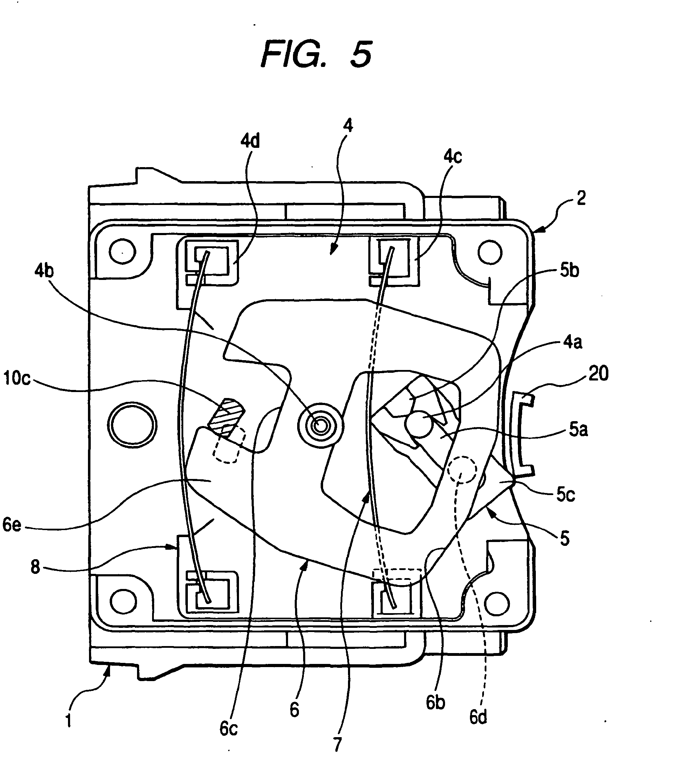

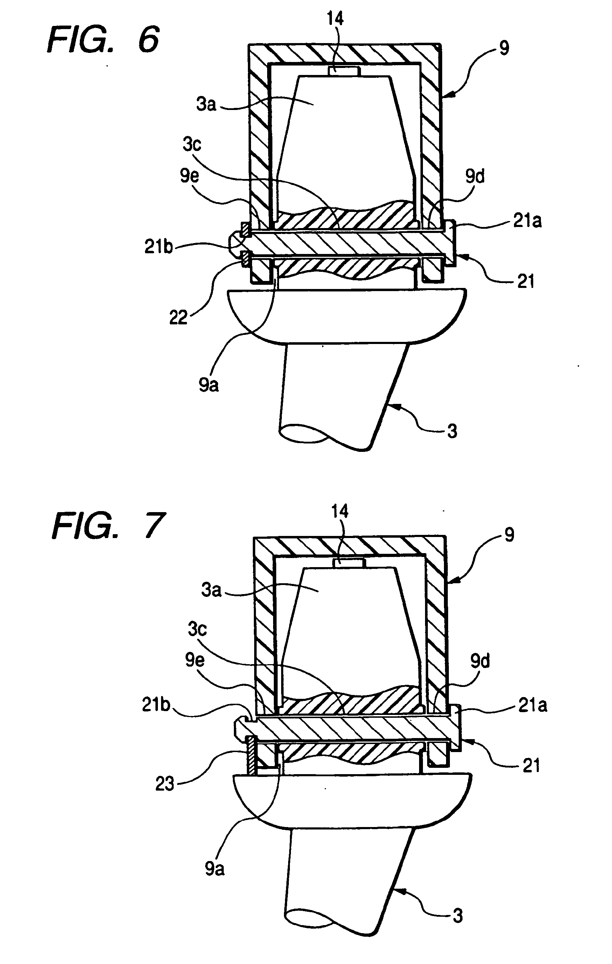

Hereinafter, an embodiment of a turn signal switch device of the present invention will now be described with reference to Figs. 1 to 7. Fig. 1 is a perspective view of the turn signal switch device of the invention, Fig. 2 is an exploded perspective view of the turn signal switch device, Fig. 3 is a diagram explaining a state where a control lever is placed in a neutral position in a cancel mechanism of the turn signal switch device, Fig. 4 is a diagram explaining a cancellation waiting state in the cancel mechanism, Fig. 5 is a diagram explaining a state where a steering wheel turns in the reverse direction in the cancellation waiting state while the control lever is pressed, Fig. 6 is a diagram explaining the shaft supporting structure of the control lever and a holder, and Fig. 7 is a diagram explaining another embodiment of the shaft supporting structure of the control lever and the holder.

Figs. 3 to 5 show a state where the cancel mechanism is seen through the bottom of a second case.

The turn signal switch device according to the present embodiment mainly includes first and second cases 1 and 2 which are formed of a synthetic resin to compose a housing, an control lever 3 which is rotatably supported by both cases 1 and 2, a middle supporting member 4 disposed between both cases 1 and 2, first and second lever members 5 and 6 placed on the inner surface of the middle supporting member 4, a first elastic member 7 which elastically urges the first lever member 5 in a direction projecting from the second case 2, and a second elastic member 8 which elastically urges the second lever member 6 so as to be held in the neutral position. As described below, the control lever 3 is provided with a holder 9, a movable member 10, and the like. The first and second cases 1 and 2 are incorporated by a snap coupling or the like so as to be fixed by a stator member (not shown) such as a column cover or combination switch.

Inside the first case 1, a V-shaped cam surface (not shown) is formed to have a central valley portion and a pair of locking sections which are positioned on both sides. A second operating member 15 of the control lever 3, which will be described, comes in sliding contact with the cam surface, so that the control lever 3 is locked in the neutral position and operation position. A switch section (not shown) formed in the first case 1 is driven by turning the control lever 3 to light on and off a lamp at the time of the left or right turn.

In the first and second cases 1 and 2, shaft holes 1a and 2a are provided in the inner surfaces which the first and second cases 1 and 2 face each other. The holder 9 to be described below is pivotably supported by the shaft holes 1a and 2a.

The middle supporting member 4 is formed of a synthetic resin in a substantially rectangular form and is disposed between the first and second cases 1 and 2. In the center of the inner surface of the middle supporting member 4, first and second cylindrical shaft sections 4a and 4b are erected at a predetermined interval on the same line. At rectangular four corners of the middle supporting member 4, two pairs of spring receiving sections 4c and 4d are provided to face each other, and the first and second elastic member 7 and 8 formed of a thin metal plate spring are provided parallel to the spring receiving sections 4c and 4d.

The first lever member 5 made of a synthetic resin is formed in a substantially rectangular shape so as to have a long hole 5a formed in the center thereof. The long hole 5a is inserted into the first shaft section 4a of the middle supporting member 4 so that the first lever member 5 can turn and slide along the first shaft section 4a. At one end of the first lever member 5, a cam section 5b is erected, and the leading end of the cam section 5b is formed in a crest shape. On the other end opposite to the cam section 5b, an abutting section 5c projects to abut on a cancellation projection 20 of a steering wheel. The one end in which the cam section 5b is provided is formed of a flat section 5d having a flat surface shape, on which the flat plate portion of the first elastic member 7 is abutted.

The second lever member 6 is formed of a synthetic resin in a flat plate shape so as to have a shaft hole 6a formed almost in the center. The shaft hole 6a is inserted into the second shaft section 4b of the middle supporting section 4 so that the second lever member 6 can turn. In addition, an opening 6b and a notch 6c are provided to interpose the shaft hole 6a, a connection pin 6d projects at one opening end of the opening 6b, and a pair of operating arm sections 6e are provided on both sides of the notch 6c. The leading ends of the operating arm sections 6e are formed of flat sections 6f having a flat surface shape which forms the same plane, and the flat plate portion of the second elastic member 8 is abutted on the flat section 6f.

The second lever member 6 is stacked on the first lever member 5 with respect to the inner surface of the middle supporting member 4, and the first and second lever members 5 and 6 are connected to each other through the long hole 5a and the connection pin 6d so as to turn and slide.

In this case, since the connection section between the first and second lever members 5 and 6 is formed to be more adjacent to the rotation trajectory of the cancellation projection 20 than the first and second shaft sections 4a and 4b, the turning of the second control lever 6 accompanied by the turning of the first control lever 5 can be reliably performed, so that an operation of the cancel mechanism can be stabilized.

The flat section 5d of the first lever member 5 projects from the opening 6b of the second lever member 6 toward the second case 2, and the first lever member 5 is elastically urged in the longitudinal direction of the long hole 5a by the first elastic member 7. The first elastic member 7 formed of a thin metal plate spring has locking sections 7a, which are formed in both sides thereof and are locked by the spring receiving sections 4c of the middle supporting member 4, and a central plate section 7b. The center portion of the place section 7b is abutted on the flat section 5d of the first lever member 5. In addition, the cam section 5b of the first lever member 5 projects toward the first case 1 through the opening 4e provided in the inner surface of the middle supporting member 4. The cam section 5b comes in sliding contact with a cam section 10b of a movable member 10, which will be described below, so that the first lever member 5 slides in the longitudinal direction of the long hole 5a.

The second lever member 6 is elastically urged in the neutral position by the second elastic member 8. The second elastic member 8 made of the same thin metal plate spring as the first elastic member 7 has a locking sections 8a, which is formed on both sides thereof and is locked by the spring receiving sections 4d of the middle supporting member 4, and a central plate section 8b. The center portion of the plate section 8b is abutted on the flat section 6f of the second lever member 6.

As such, the first flat section 5d is formed at one end of the first lever member 5, and the plate section 7b of the first elastic member 7 is abutted on the first flat section 5d. Further, the second flat section 6f is formed at one end of the second lever member 6, and the plate section 8b of the second elastic member 8 is abutted on the second flat section 6f. Then, the first and second lever members 5 and 6 can be held in the neutral position of turning. Therefore, the first and second lever member 5 and 6 can be held by the respective flat sections 5d and 6f so as to be reliably held in the neutral position of turning.

The cancel mechanism of the turn signal switch device includes the middle supporting member 4 disposed between the first and second cases 1 and2, the first and second lever members 5 and 6, and the first and second elastic members 7 and 8, which have been described above.

The control lever 3 is provided with the holder 9 and the movable member 10, and further has first and second operating members 11 and 15 and a torsion coil spring 19.

The control lever 3 formed of a synthetic resin has a base section 3a and a lever section 3b. The first operating member 11 is held by the rear end of the base section 3a. In addition, the base section 3a is provided with a boring or lever hole 3c penetrating between both sides of the base section 3a, and a shaft 21 inserted into the shaft holes 9d and 9e of the holder 9 is inserted into the boring hole 3c so as to turn in the vertical (front and back) direction. A hole 3d for a driving projection is provided on the top surface of the base section 3a in order to insert the driving projection (not shown) thereinto. The driving projection is connected to a switch section (not shown) arranged in the first case 1.

The first operating member 11 includes a driving body 12 formed of a synthetic resin, a coil spring 13 urging the driving body 12, and a rotating member 14 mounted on the leading end of the driving body 12. By turning the control lever 3, the first operating member 11 comes in sliding contact with the cam surface (not shown) of the holder 9. At this time, the driving body 12 and the rotating member 14 are pressed against the cam surface by the elastic force of the coil spring 13 so as to obtain a suitable operating force. Further, the turning of the control lever 3 in the vertical (front and back) direction allows the rotating member 14 to roll the cam surface. Then, the switch section is switched over, so that beam switching or passing operation is properly performed.

The holder 9 formed of a synthetic resin has a housing 9a so as to be engaged with the base section 3a of the control lever 3, and a cam section (not shown) is provided on the inner surface of the housing 9a. The rotating member 14 of the first operating member 11 rolls in the cam section. At the upper and lower of the housing 9a, spindles 9b and 9c are provided. The spindles 9b and 9c are pivotably supported by the shaft holes 1a and 2a of the first and second cases 1 and 2 so as to be rotatably mounted. On a pair of opposing side plates of the holder 9, the shaft holes 9d and 9e are provided to face the boring hole 3c of the base section 3a of the control lever 3. The shaft 21 formed of a metallic material having rigidity is inserted into the shaft holes 9d and 9e and the boring hole 3c so that the control lever 3 is pivotably supported in the vertical (front and back) direction by the holder 9.

Fig. 6 shows an example, not belonging to the invention, of a shaft supporting structure between the control lever 3 and the holder 9. As shown in Fig. 6, the shaft 21 has retaining sections formed at both ends thereof so as not to be deviated after it is inserted into the shaft holes 9d and 9e and the boring hole 3c. The retaining sections includes a head section 21a having a larger diameter than the shaft diameter of shaft 21 provided at one end of the shaft 21, and a circumferential groove 21b formed along the circumference direction at the other end of the shaft 21. The circumferential groove 21b is fitted into a substantially C-shaped washer 22 formed of a metallic material.

As such, the base section 3a of the control lever 3 is pivotably supported by the washer 21 having rigidity which is supported by the pair of opposing side plates of the holder 9. Therefore, the control lever 3 can be prevented from being deviated from the holder, even though the elastic force of the coil spring 13 urging the driving body 12 and the rotating member 14 is raised to increase the operating force of the control lever 3.

Since the shaft 21 is formed of a metallic material, the control lever 3 can be reliably prevented from being deviated from the holder 9.

As described above, the retaining sections of the shaft 21 includes the head section 21a which has a lager diameter than the shaft diameter of the shaft 21 and is formed on one side of the shaft 21, the circumferential groove 21b formed along the circumference direction on the other side of the shaft 21, and the washer 22 fitted into the circumferential groove 21b. Therefore, the control lever 3 can be prevented from being deviated from the holder 9 by such a simple structure.

Fig. 7 shows an embodiment of the shaft supporting structure of the control lever 3 and the holder 9. The shaft 21 has retaining sections formed at both ends thereof so as not to be deviated after it is inserted into the shaft holes 9d and 9e and the boring hole 3c, as shown in Fig. 7. However, the retaining sections includes the head section 21a which has a lager diameter than the shaft diameter of the shaft 21 and is formed on one side of the shaft 21, the circumferential groove 21b formed along the circumference direction in the other side of the shaft 21, and a fitting section 23 having a projection shape which is integrally provided with a portion of the control lever 3 instead of the substantially C-shaped washer 22. The fitting section 23 is always fitted into the circumferential groove 21b even when the control lever 3 is inclined and turned.

The fitting section 23 is integrally molded simultaneously with the control lever 3 by using the same molding material such as a synthetic resin. Further, the fitting section 23 which is fitted into the circumferential groove 21b of the shaft 21 so as to retain the shaft 21 is integrally provided in the control lever 3. Therefore, the washer 22 as a separate part is not needed, and efficiency of assembling operation is enhanced. Further, it is possible to prevent increase in cost.

The second operating member 15 is held by the rear end of the holder 9, and a driving projection 9f is provided on the top surface of thereof to be connected to the switch section (not shown) arranged in the first case 1. On the top surface of the holder 9, a window hole 9g is provided, through which a driving projection (not shown) projecting in the hole 3d for a driving projection provided in the base section of the control lever 3 projects.

The second operating member 15 includes a driving body 16 formed of a synthetic resin, a coil spring 17 urging the driving body 16, and a rotating member 18 mounted at the leading end of the driving body 16. With the horizontal (left and right) turning of the control lever 3, the second operating member 15 comes in rotating contact with the cam surface (not shown) of the first case 1. Further, the turning of the control lever 3 in the horizontal (left and right) direction allows the rotating member 18 to roll on the cam surface. Then, the switch section is switched over so as to light on and off a lamp at the time of the left or right turn.

The movable member 10 formed of a synthetic resin is arranged on the bottom surface of the holder 9. At one end of the movable member 10, a spring locking section 10a is provided, and one end of a torsion coil spring 19 is locked to the locking section 10a. The other end of the torsion coil spring 19 is locked by the holder 9. In other words, the movable member 10 is mounted on the holder 9 through the torsion coil spring 19 so as to slightly turn.

The cam section 10b having a crest shape is provided at one end of the movable member 10. The cam section 10b abuts on and comes in sliding contact with the cam section 5b of the first lever member 5 through the opening 4e provided in the inner surface of the middle supporting member 4. At this time, when the first lever member 5 comes in sliding contact with the cam section 10b of the movable member 10, the first lever member 5 slides in the longitudinal direction of the long hole 5a.

At the other end of the movable member 10 opposite to the cam section 10b, a receiving section 10c having a projecting pillar shape is provided to project toward the middle supporting member 4. The receiving section 10c is arranged to extend into the notch 6c of the second lever member 6 through the notched section 4f of the middle supporting member 4. When the control lever 3 turns in the horizontal (left and right) direction to be locked in the operation position, the receiving section 10c is held in a state where it is abutted on the operating arm section 6e of the second lever member 6.

As shown in Figs. 1 and 2, in the case of assembling the turn signal switch device having the above-mentioned construction, first, the control lever 3 engaged with the first operating member 11 is inserted from the opening 9a of the holder 9, the pair of shaft holes 9d and 9e are opposed to the boring hole 3c, and the shaft 21 is inserted from the shaft hole 9d so that the control lever 3 is turnably supported by the holder 9. Then, the movable member 10 which is urged by the second operating member 15 and the torsion coil spring 19 is then mounted on the holder 9. After that, the spindle 9b is turnably mounted in the shaft hole 1a inside the opening of the first case 1 so that the movable member 10 is placed on the holder 9.

Next, the middle supporting member 4 in which the first and second elastic members 7 and 8 are arranged is mounted so as to be stacked on the opening of the case 1 on which the holder 9 is mounted. At this time, the cam section 10b of the movable member 10 is correspondingly disposed so as to face the opening 4e of the middle supporting member 4, as shown in Fig. 2. Further, the receiving section 10c projecting on the movable member 10 is disposed at the notched section 4f in a state where it passes therethrough.

Next, the long hole 5a of the first lever member 5 is pivotably supported by the first shaft section 4a of the middle supporting member 4 so as to rotate and slide. Further, the cam section 5b projecting on one side (the lower side in the drawing) is engaged with the cam section 10b of the movable member 10 which is disposed in the lower side through the opening 4e of the middle supporting member 4. At this time, even though the flat section 5d of the first lever member 5 is abutted on the first elastic member 7 so as to be elastically urged in the longitudinal direction of the long hole 5a, the leading end of the cam section 5b of the first lever member 5 is abutted on and regulated by the leading end of the cam section 10b of the movable member 10, so that the flat section 5d is held in the position in a state where it is urged by the first elastic member 7.

In this state, the connection pin 6d projecting on the second lever member 6 is engaged with the long hole 5a of the first lever member 5, and the shaft hole 6a of the second lever member 6 is turnably supported by the second shaft section 4b of the middle supporting member 4. Further, the receiving section 10c projecting on the movable member 10 passes through the notch 6c so as to be disposed between the pair of operating arm sections 6e. At this time, the flat section 6f of the second lever member 6 is abutted on the second elastic member 8 so as to be elastically urged in the neutral position.

Finally, with the opening of the second case 2 being downward, the first and second lever members 5 and 6 are fitted inside the opening so that the shaft hole 2a of the second case 2 is pivotably supported by the spindle 9c of the holder 9. Further, the second case 2 is mounted on the first case 1 so as to interpose the middle supporting member 4 from the above of the middle supporting member 4. Then, the assembling is completed.

Next, an operation of the turn signal switch device having the above-mentioned construction will be described with reference to Figs. 3 to 5.

As shown in Fig. 3, when the control lever 3 is positioned in the neutral position, the leading end of the second operating member 15 is abutted on the central valley portion of the cam surface (not shown) of the first case 1 so as to be held in the corresponding position. At this time, the cam section 5b of the first lever member 5 is abutted on the apex of the crest-shaped cam section 10b of the movable member 10, and the first lever member 5 retreats against the urging force of the first elastic member 7, as shown in Fig. 3.

Accordingly, the abutting section 5c of the first lever member 5 is positioned outside the rotation trajectory of the cancellation projection 20 which rotates together with a steering wheel. Although the steering wheel is rotated in this state, the cancellation projection 20 is not abutted on the abutting section 5c of the first lever member 5, and the control lever 3 is maintained in the neutral position.

If the control lever 3 turns in the horizontal (left or right) direction from the neutral position, the leading end of the second operating member 15 slides on the cam surface (not shown) of the first case 1 so as to be locked to the locking sections provided on both sides, and the tactile feeling occurs when the leading end of the second operating member 15 climbs over the slope of the cam surface.

Here, if the control lever 3 turns in the direction of an arrow B of Fig. 2, the holder 9 and the movable member 10 also rotate in the same direction together with the control lever 3. In accordance with that, the apex of the cam section 10b is deviated from the cam section 5b. Therefore, as shown in Fig. 4, the first lever 5 receives the elastic force of the first elastic member 7 advances along the longitudinal direction of the long hole 5a, and the abutting section 5c advances into the rotation trajectory of the cancellation projection 20.

At this time, with the turning of the control lever 3 in the direction of the arrow B, the receiving section 10c of the movable member 10 held in the stable position of the holder 9 is displaced within the notch 6c of the second lever member 6 so as to abut on one operating arm section 6e of the notch 6c, as shown in Fig. 4. Further, with the turning of the control lever 3 in the direction of the arrow B, the driving projection 9f of the holder 9 drives the switch section (not shown) arranged in the first case 1, so that the switching of contact point is performed and a lamp (not shown) for the right turn operates to light on and off.

In the right turn state shown in Fig. 4, if the steering wheel is rotated in the reverse direction (the direction of an arrow of Fig. 4, the cancellation projection 20 is abutted on the abutting section 5c of the first lever member 5 during returning the steering wheel. As a result, the first lever member 5 rotates around the first shaft section 4a in the clockwise direction of Fig. 4. In accordance with that, the second lever member 6 connected to the first lever member 5 rotates around the second shaft section 4b in the clockwise direction. Therefore, the operating arm section 6e of the second lever member 6 turns to be displaced in the upper direction of the drawing.

Accordingly, the operating arm section 6e presses the receiving section 10c of the movable member 10 in the upper direction, and the pressing force is transmitted to the holder 9 through the movable member 10. Therefore, the leading end of the second operating member 15 held by the holder 9 is deviated from the locking section of the cam surface (not shown) of the first case 1 to move to the central valley portion, and the control lever 3 and the first and second lever members 5 and 6 automatically return to the neutral position shown in Fig. 3.

As such, the pair of operating arm sections 6e are provided in the second lever member 6 facing the first lever member 5. Further, with the rotation of the first lever member 5, the operating arm sections 6e are abutted on the receiving section 10c provided to project on the movable member 10 so as to turn the holder 9 through the movable member 10. Then, the control lever 3 returns to the neutral position from the operation position. Therefore, the cam surface or the like does not need to be provided, the construction is simplified, and the control lever 3 can reliably return to the neutral position.

In addition, in the right turn state shown in Fig. 4, when some force inhibiting the automatic return can act on the control lever 3, for example, when the steering wheel is rotated in the reverse direction while the control lever 3 is pressed, the second lever member 6 pivots on the second shaft section 4b in the clockwise direction as described above. However, the holder 9 does not rotate because the control lever 3 is pressed. As a result, an overload is generated on the abutment portion between.the operating arm section 6e and the receiving section 10c of the movable member 10.

When such an overload is generated, the receiving section 10c is pressed along the operating arm section 6e by a component force in the rotation direction of the second lever member 6, and the movable member 10 slightly turns against the repulsive force of the torsion coil spring 19, as shown in Fig. 5. Therefore, since the receiving section 10c swings from the stable position indicated by a dashed line in Fig. 5 to the retreat position indicated by a solid line (cross-section), the first and second lever members 5 and 6 can rotate without being hindered by the receiving section 10c.

Further, if the cancellation projection 20 passes through the abutting section 5c of the first lever member 5, the movable member 10 automatically returns to the stable position from the retreat position by the repulsive force of the torsion coil spring 19. Therefore, the movable member 10 is again maintained in the right turn state shown in Fig. 4.

As such, since the overload generated in the abutment portion between the operating arm section 6e of the second lever member 6 and the receiving section 10c of the movable member 10 at the time of the cancel operation is released (absorbed) by the swinging of the movable member 10, the constructional parts of the power transmission system including the movable member 10 and both levers 5 and 6 are prevented from being damaged.

On the other hand, if the control lever 3 turns in the direction orthogonal to the indicating position (the direction orthogonal to the arrow A-B of Fig. 2), the control lever 3 and the first operating member 11 rotates by a predetermined angle in the perpendicular direction with a straight line connecting both ends of the boring hole 3c serving as the rotation axis with respect to the housing (both cases 1 and 2) and the holder 9, as described above. In accordance with that, the leading end of the first operating member 11 rolls on the cam section (not shown) of the inner surface of the opening 9a of the holder 9, and the tactile feeling occurs. At this time, in accordance with the turning of the control lever 3, the driving projection inserted into the hole 3d for a driving projection drives the switch section (not shown) arranged in the first case 1. Therefore, the contact point is switched over, so that beam switching or passing operation is performed.

As such, the above-described turn signal switch device of the present invention is provided with the control lever 3 having the case section 3a and the lever section 3b, the holder 9 having the housing 9a in which the base section 3a is housed and pivotably supporting the control lever 3 so that the control lever 3 can be inclined along one plane, and the cases 1 and 2 supporting the holder 9 and the control lever 3 so that the holder 9 can turn along the other plane substantially orthogonal to the one plane. The control lever 3 is provided with the boring hole 3 passing through both side portions of the base section 3a, and the shaft holes 9d and 9e which face the boring hole 3c and are provided to the pair of opposing side plates of the holder 9. The shaft 21 formed of a metallic material having rigidity is inserted into the shaft holes 9d and 9e and the boring hole 3c. At both ends of the shaft 21, the head section 21a having a larger diameter than the shaft diameter and the circumferential groove 21b are provided. The fitting section 23 integrally provided with a portion of the control lever 3 is fitted into the circumferential groove 21b to thereby compose the retaining section. Since the base section 3a of the control lever 3 is pivotably supported by the shaft 21 having rigidity which is supported by the pair of opposing side plates of the holder 9, the control lever 3 can be prevented from being deviated from the holder 9 even though the operating force of the control lever 3 is increased.

As described above, the turn signal switch device includes the control lever having the base section and the lever section; the holder having the opening into which the base section is inserted and pivotably supporting the control lever so that the control lever can be inclined along one plane; and the cases that support the holder and the control lever so as to turn along the other plane substantially orthogonal to the one plane. The boring hole passing through both sides of the base section is provided in the control lever, the shaft holes facing the boring hole are provided in the pair of side plates of the opening of the holder facing each other, and the shaft having rigidity is inserted into the shaft holes and the boring hole, so that retaining sections are formed at both ends of the shaft. Therefore, although the operating force of the control lever is increased, the control lever can be prevented from coming off from the holder.

The retaining sections includes the head section which is formed at one end of the shaft and has a larger diameter than the shaft diameter of the shaft, the circumferential groove formed along the circumference direction of the other end of the shaft, and the washer which is fitted into the circumferential groove. Therefore, with such a simple construction, the control lever can be prevented from coming off from the holder.

In addition, the retaining sections are further composed of the head section which is formed at one end of the shaft and has a larger diameter than the shaft diameter of the shaft, the circumferential groove formed along the circumference direction of the other end of the shaft, and the fitting section which is integrally provided with a portion of the control lever and is always fitted into the circumferential groove even when the control lever is inclined or turns. Therefore, the washer is not needed, and operational efficiency is enhanced to prevent the increase in cost.

In addition, since the shaft is formed of a metallic material, the control lever can be more reliably prevented from coming off from the holder.

## Claims

1. A turn signal switch device comprising:
a control lever (3) having a base section (3a) and a lever section (3b);
a holder (9) which has a housing in which the base section (3a) is housed and pivotably supports the control lever (3) so as to be inclined along one plane; and
a case (1,2) that supports the holder (9) so as to turn along the other plane substantially orthogonal to the one plane,
wherein a lever hole (3c) passing through both sides of the base section (3a) is provided to the control lever, shaft holes (9d, 9e) are provided to a pair of opposing side plates of the holder (9) so as to face the lever hole (3c), respectively, and a shaft (21) having rigidity is inserted into the shaft holes (9d, 9e) and the lever hole, **characterized in that** retaining sections (21a; 21b) are formed at both ends of the shaft,
and the retaining sections include a head section (21a) which is formed at one end of the shaft (21) and has a larger diameter than the shaft diameter of the shaft, a circumferential groove (21b) formed along the circumference direction of the other end of the shaft, and a fitting section (23) which is integrally provided with a portion of the control lever (3) and is always fitted into the circumferential groove even when the control lever is inclined or turns.

2. The turn signal switch device according to claim 1,
wherein the shaft (21) is formed of a metallic material.

## Patentansprüche

1. Fahrtrichtungsanzeigeschaltervorrichtung, aufweisend:
einen Steuerhebel (3) mit einem Basisbereich (3a) und einem Hebelbereich (3b);
einen Halter (9), der ein Gehäuseelement aufweist, in dem der Basisbereich (3a) untergebracht ist, und der den Steuerhebel (3) schwenkbar abstützt, so dass sich dieser entlang einer Ebene verschwenken lässt; und
ein Gehäuse (1, 2), das den Halter (9) derart abstützt, dass dieser entlang der anderen Ebene, die im Wesentlichen orthogonal zu der einen Ebene ist, drehbar ist,
wobei eine Hebelöffnung (3c), die durch beide Seiten des Basisbereichs (3a) hindurch geht, an dem Steuerhebel vorgesehen ist, Schaftöffnungen (9d, 9e) in einem Paar einander gegenüberliegender Seitenplatten des Halters (9) in der Hebelöffnung (3c) jeweils zugewandt gegenüberliegender Weise vorgesehen sind und ein Steifigkeit aufweisender Schaft (21) in die Schaftöffnungen (9d, 9e) und die Hebelöffnung eingesetzt ist,
**dadurch gekennzeichnet, dass** Festhaltebereiche (21a; 21b) an beiden Enden des Schafts ausgebildet sind und dass die Festhaltebereiche einen Kopfbereich (21 a), der an dem einen Ende des Schafts (21) ausgebildet ist und einen größeren Durchmesser hat als der Schaftdurchmesser des Schafts, eine Umfangsnut (21 b), die in Umfangsrichtung an dem anderen Ende des Schafts ausgebildet ist, sowie einen Einpassbereich (23) beinhalten, der in integraler Weise an einem Bereich des Steuerhebels (3) vorgesehen ist und stets in die Umfangsnut eingepasst ist, selbst wenn der Steuerhebel eine Schwenkbewegung oder Drehbewegung ausführt.

2. Fahrtrichtungsanzeigeschaltervorrichtung nach Anspruch 1,
wobei der Schaft (21) aus einem Metallmaterial gebildet ist.

## Revendications

1. Dispositif de commutation de signal de direction comprenant :
un levier de commande (3) ayant une section de base (3a) et une section de levier (3b) ;
un support (9) qui comporte un boîtier dans lequel la section de base (3a) est logée et supporte à pivotement le levier de commande (3) afin d'être incliné le long d'un plan ; et
un carter (1, 2) qui supporte le support (9) afin de tourner le long de l'autre plan substantiellement orthogonal au premier plan,
dans lequel un trou de levier (3c) traversant les deux côtés de la section de base (3a) est prévu pour le levier de commande, des trous d'axe (9d, 9e) sont prévus sur une paire de plaquettes latérales opposées du support (9) afin de faire face au trou de levier (3c), respectivement, et un axe (21) ayant une certaine rigidité est inséré dans les trous d'axe (9d, 9e) et le trou de levier, **caractérisé en ce que** des sections de retenue (21a ; 21b) sont formées aux deux extrémités de l'axe, et les sections de retenue comportent une section de tête (21a) qui est formée à une extrémité de l'axe (21) et a un plus gros diamètre que le diamètre de l'axe, une rainure périphérique (21b) formée dans le sens de la périphérie de l'autre extrémité de l'axe, et une section de montage (23) qui est fournie intégralement avec une partie du levier de commande (3) et est toujours logée dans la rainure périphérique, même lorsque le levier de commande est incliné ou tourne.

2. Dispositif de commutation de signal de direction selon la revendication 1, dans lequel l'axe (21) est fait d'un matériau métallique.
